# EUROPEAN PATENT SPECIFICATION

(11) **EP 1 224 858 B1**
(45) Date of publication and mention of the grant of the patent: **17.01.2007**
(21) Application number: 01308882.8
(22) Date of filing: 19.10.2001
(51) Int. Cl.: A01J 7/04

(54) **An applicator**
Applikator
Applicateur

(30) Priority: 20.01.2001 GB 0101550
(43) Date of publication of application: 24.07.2002
(73) Proprietor: AMBIC EQUIPMENT LIMITED, Witney, Oxfordshire, OX8 6XT (GB)
(72) Inventor: Cross, Ian, Chipping Norton, Oxfordshire OX7 3PT (GB)
(74) Representative: Hocking, Adrian Niall

(56) References cited:
- DE-A- 19 942 066
- FR-A- 2 087 642
- GB-A- 2 299 011
- US-A- 2 350 183
- US-A- 3 366 111
- US-A- 3 921 860

## Description

This invention relates to an applicator for treating the teats of animals, typically cows, such as with a disinfectant.

It is known to provide applicators for treating the teats of animals, typically cows, with a liquid disinfectant immediately prior to and/or immediately after milking. Some known applicators comprise a compressible container and a rigid cup threadably engaged with the open end of the container. The cup of known applicators is frustoconical and has an opening in its base. Liquid in the container can be discharged through the opening into the cup by compressing the container and, whilst holding the container in the compressed state, the cup can be placed over teats to dip the teats in the disinfectant. The liquid will return to the container when the container is no longer held in a compressed condition.

These known applicators work quite satisfactorily but there are conceived advantages in dipping the teats in a foam rather than a liquid. Firstly, foam is more visible to the eye than liquid and, therefore, the use of foam will provide a user with visible confirmation that all teats have been dipped. Also, it is thought that by using foam, less disinfectant will be used. Foam may also have a greater residue on the teat of its active ingredients, which will therefore remain on the teat for a longer period of time. Other versions include a non return system that prevents used chemical returning to the container.

It is known from GB-A-2299011 to provide an applicator comprising a compressible container for containing a liquid including a foaming agent, a cup mounted on the container, foaming means for drawing air into liquid in the container as the container expands from a compressed state to cause the liquid to foam, and passage means between the container and the cup and through which foam can pass from the container to the cup as the container is compressed. This however suffers from the drawback that the operator has to continually squeeze the container to produce sufficient foam to dip each teat. Herd sizes are increasing making hand squeezing more onerous.

According to the present invention, there is provided an applicator comprising a container for containing a liquid including a foaming agent, a cup mounted on the container, means for supplying gas at an elevated pressure into liquid in the container to cause the liquid to foam and passage means between the container and the cup and through which foam can pass from the container to the cup.

Preferred and/or optional features of the invention are set forth in claims 2 to 9 inclusive.

The invention will now be more particularly described, by way of example, with reference to the accompanying drawings, wherein:
Figure 1 is a schematic view of a foaming system including three applicators embodying the present invention,
Figure 2 is a side view of one of the applicators shown in Figure 1, and
Figure 3 is a sectional view of part of one of the applicators shown in Figure 2.

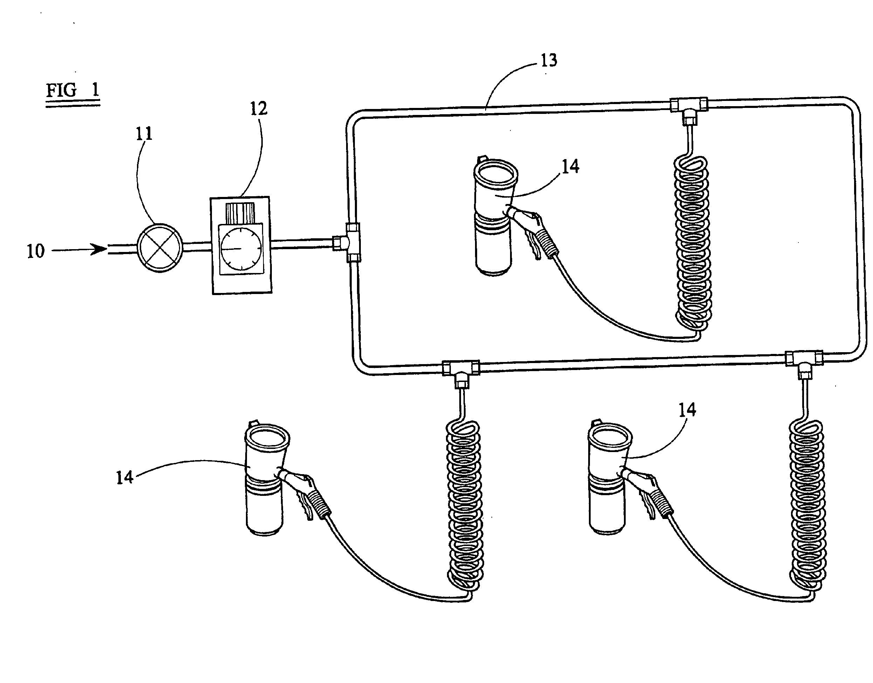

Referring firstly to Figure 1, there is shown therein a foaming system comprising a source of compressed gas, typically air, 10, a shut off valve 11, a pressure regulator 12 for reducing the pressure from the compressed gas source 10 to 3 to 6 p.s.i. and pipework 13 connecting the gas source 10, in the example shown, to three applicators 14.

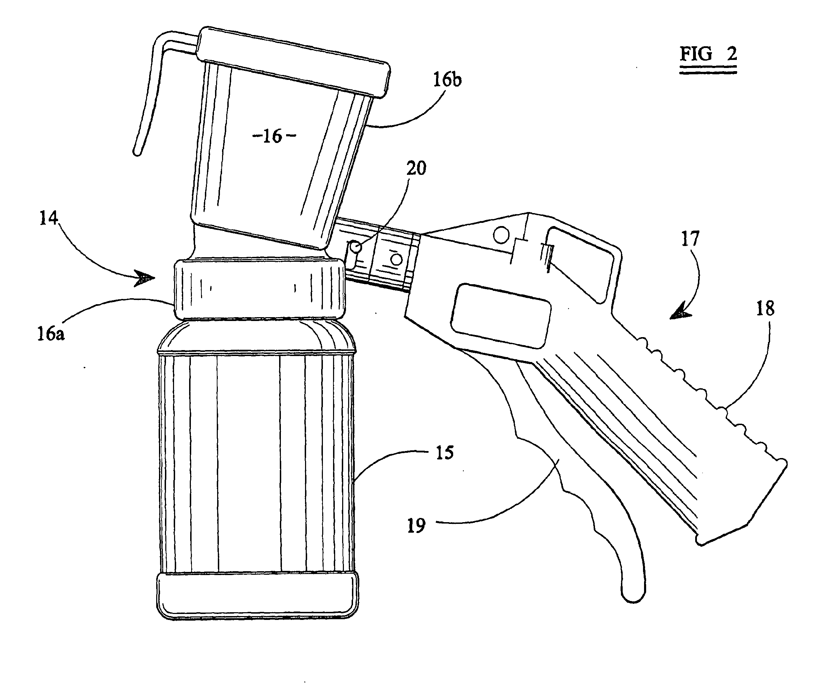

As shown in Figure 2, each applicator 14 comprises a container, in the form of an open top bottle 15, and a plastics cup 16 which is threadably engaged with the open upper end of the bottle 15.

The cup 16 has a generally cylindrical base portion 16a which threadably engages with the open end of the bottle 15 and an upper, generally frustoconical portion 16 b which is inclined at a small angle with respect to the base portion 16a. The applicator also comprises a gun 17 having a body part 18 and a manually operable trigger 19 which is operable to open and close a valve in the body part 18 of the gun. The gun 17 is releasably connected to the cup 16 by a bayonet fixing 20.

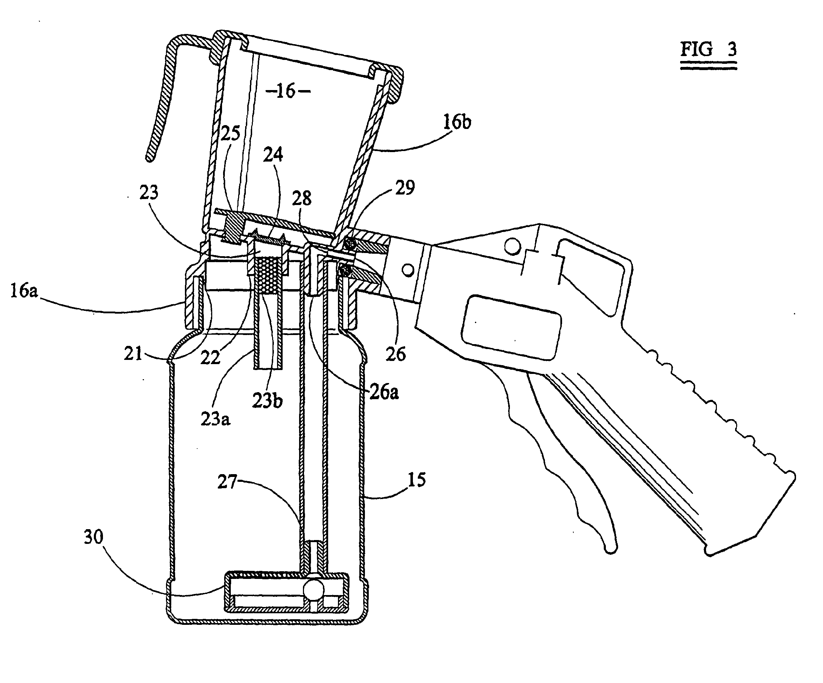

As shown in Figure 3, the base portion 16a of the cup has an internal annular flange 21 which fits inside the upper externally threaded portion of the bottle 15 to give the connection between the bottle and the cup added rigidity. The base portion 16a of the cup also has a depending central collar 22 which defines an opening 23. A short tube 23a is fitted in the opening 23 and projects downwards into the bottle. A diffuser 23b may be located in the upper end of the tube 23a. This diffuser regulates the size of bubbles produced as foam. A valve member 24 seats against the upper end of the opening 23 and has a boss that locates into that opening. An apertured disc 25 is snap fittably engaged with the base portion 16a and this disc serves to limit upward displacement of the valve member 24 away from its seated position and to evenly distribute foam into the cup.

A gas inlet 26 is moulded into the side wall of the cup 16, emerging in the centre of the bayonet fitting 20. A plastics restrictor 28 is provided in the gas inlet 26 to regulate the volume of gas entering the applicator. Sealed communication with the gun 17 is effected by means of an "O" ring 29. A spigot 26a projects downwards between the annular flange 21 and the collar 22.

A flexible tube 27 is connected to the spigot 26a permitting gas from the inlet 26 to be directed to the bottom of the bottle. A moulded foaming head 30 is connected to the lower end of the tube 27 and comprises a non return valve and a series of fine holes.

In use, the bottle 15 is partially filled with a liquid, typically a liquid disinfectant, containing a foaming agent. In order to cause the liquid to foam up, the trigger 19 of the gun 17 is compressed to allow gas at an elevated pressure to enter the bottle via the foaming head 30 and into the liquid through the fine holes of the foaming head so producing bubbles in the liquid and foam above its top level. This foam passes up through the tube 23a, through the diffuser 23b, past the valve member 24 which is unseated and through the apertures in the disc 25. The valve member 24 prevents the return of foam to the bottle and the foam therefore collects within the cup 16. After sufficient foam has been collected in the cup, the cup can be placed over teats so that the teats are disinfected by the foam.

The embodiment described above is given by way of example only and various modifications will be apparent to persons skilled in the art without departing from the scope of the invention.

## Claims

1. An applicator comprising a container (15) for containing a liquid including a foaming agent, a cup (16) mounted on the container, and passage means (23) between the container and the cup and through which foam can pass from the container to the cup, **characterized in that** the applicator further comprises means for supplying gas at an elevated pressure into liquid in the container to cause the liquid to foam.

2. An applicator as claimed in claim 1, wherein the gas supplying means includes manually operable valve means located externally of the cup.

3. An applicator as claimed in claim 2, wherein the valve means are part of a gun (17).

4. An applicator as claimed in claim 2 or claim 3, wherein the valve means are releasably connected to the cup and wherein the cup has an inlet passage (26) communicating between the valve means and a tube (27) extending into the container.

5. An applicator as claimed in claim 4, wherein the valve means are connected to the cup by a bayonet fixing (20).

6. An applicator as claimed in any one of the preceding claims, wherein the passage means (23) between the container and the cup include means (24) at least restricting the return of foam from the cup to the container.

7. An applicator as claimed in claim 6, wherein the restricting means comprises a one way valve (24).

8. An applicator cup as claimed in any one of the preceding claims, wherein the cup is releasably connected to the container.

9. An applicator as claimed in any one of the preceding claims in combination with a source of gas (10) at an elevated pressure and pressure regulating means (12) for regulating the pressure of gas supplied into liquid in the container.

## Patentansprüche

1. Applikator, der einen Behälter (15) zur Aufnahme einer Flüssigkeit, einschließlich eines Schäummittels, einen Becher (16), der auf dem Behälter montiert ist und Durchgangsmittel (23) zwischen dem Behälter und dem Becher umfasst und durch die Schaum aus dem Behälter in den Becher gelangen kann, **dadurch gekennzeichnet, dass** der Applikator weiter Mittel zur Lieferung von Gas mit erhöhtem Druck in die im Behälter befindliche Flüssigkeit umfasst, um Schäumen der Flüssigkeit zu bewirken.

2. Applikator nach Anspruch 1, wobei das Gas liefernde Mittel manuell betriebsfähige Ventilmittel aufweist, die sich äußerlich des Bechers befmden.

3. Applikator nach Anspruch 2, wobei die Ventilmittel Teil einer Pistole (17) sind.

4. Applikator nach Anspruch 2 oder Anspruch 3, wobei die Ventilmittel lösbar an den Becher angeschlossen sind und wobei der Becher einen Einlassdurchgang (26) aufweist, der zwischen den Ventilmitteln und einem Rohr (27) kommuniziert, das sich in den Behälter erstreckt.

5. Applikator nach Anspruch 4, wobei die Ventilmittel durch eine Bajonettbefestigung (20) an den Becher angeschlossen sind.

6. Applikator nach einem beliebigen der vorherigen Ansprüche, wobei die Durchgangsmittel (23), zwischen dem Behälter und dem Becher, Mittel (24) aufweisen, die mindestens den Rücklauf von Schaum aus dem Becher in den Behälter drosseln.

7. Applikator nach Anspruch 6, wobei die Drosselmittel ein Einwegentil (24) umfassen.

8. Applikatorbecher nach einem beliebigen der vorherigen Ansprüche, wobei der Becher lösbar an den Behälter angeschlossen ist.

9. Applikator nach einem beliebigen der vorherigen Ansprüche in Kombination mit einer Gasquelle (10) mit einem erhöhten Druck und Druckregelmitteln (12) zum Regeln des Gasdrucks, der in die Flüssigkeit im Behälter geliefert wird.

## Revendications

1. Applicateur comprenant un conteneur (15) pour contenir un liquide comprenant un agent moussant, un godet (16) monté sur le conteneur, et un moyen de passage (23) entre le conteneur et le godet et à travers lequel la mousse peut passer du conteneur au godet, **caractérisé en ce que** l'applicateur comprend en outre un moyen pour délivrer un gaz à une pression élevée dans le liquide dans le conteneur pour amener le liquide à mousser.

2. Applicateur selon la revendication 1, dans lequel le moyen d'alimentation en gaz comprend un moyen formant soupape actionnable manuellement situé à l'extérieur du godet.

3. Applicateur selon la revendication 2, dans lequel le moyen formant soupape fait partie d'un pistolet (17).

4. Applicateur selon la revendication 2 ou la revendication 3, dans lequel le moyen formant soupape est raccordé de manière libérable au godet et dans lequel le godet comporte un passage d'entrée (26) communiquant entre le moyen formant soupape et un tube (27) s'étendant dans le conteneur.

5. Applicateur selon la revendication 4, dans lequel le moyen formant soupape est raccordé au godet par une fixation à baïonnette (20).

6. Applicateur selon l'une quelconque des revendications précédentes, dans lequel le moyen de passage (23) entre le conteneur et le godet comprend un moyen (24) limitant au moins le retour de la mousse du godet au conteneur.

7. Applicateur selon la revendication 6, dans lequel le moyen de limitation comprend un clapet anti-retour (24).

8. Godet d'applicateur selon l'une quelconque des revendications précédentes, dans lequel le godet est raccordé de manière libérable au conteneur.

9. Applicateur selon l'une quelconque des revendications précédentes en combinaison à une source de gaz (10) à une pression élevée et à un moyen de régulation de pression (12) pour réguler la pression du gaz délivré dans le liquide dans le conteneur.
